(19) **Europäisches Patentamt / European Patent Office / Office européen des brevets**

(11) **EP 4 564 582 A1**

(12) **EUROPEAN PATENT APPLICATION**
published in accordance with Art. 153(4) EPC

(43) Date of publication:
**04.06.2025 Bulletin 2025/23**

(21) Application number: **22959913.9**

(22) Date of filing: **28.09.2022**

(51) International Patent Classification (IPC):
**H01M 50/533** (2021.01)    **H01M 4/70** (2006.01)

(52) Cooperative Patent Classification (CPC):
**H01M 4/70; H01M 50/533;** Y02E 60/10

(86) International application number:
**PCT/CN2022/122107**

(87) International publication number:
**WO 2024/065266 (04.04.2024 Gazette 2024/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
• **HUANG, Xian**
**Ningde, Fujian 352100 (CN)**

• **LIU, Chengyong**
**Ningde, Fujian 352100 (CN)**
• **HU, Bobing**
**Ningde, Fujian 352100 (CN)**
• **CAI, Xiaolan**
**Ningde, Fujian 352100 (CN)**
• **HE, Xiaoning**
**Ningde, Fujian 352100 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **ELECTRODE ASSEMBLY, BATTERY CELL, BATTERY, AND ELECTRIC DEVICE**

(57)     Provided are an electrode assembly (22), a battery cell (20), a battery (10), and an electric device. The electrode assembly (22) comprises: an electrode sheet (31); and a tab (32), the tab (32) being arranged at the end of the electrode sheet (31) in a first direction (X), the tab (32) being provided with a bent portion (322), and the bent portion (322) being used for providing stretching space for the tab (32). By providing the bent portion (322) on the tab (32), when the electrode assembly (22) expands, the tab (32) can be stretched out from the bent portion (322) to maintain the electrical connection of the tab (32), and the tab (32) is prevented from being cracked or even broken by being pulled due to excessive expansion of the thickness of the electrode assembly (22), thereby improving the reliability of the battery (10).

FIG. 4

## Description

### TECHNICAL FIELD

The present application relates to the technical field of batteries, and in particular to an electrode assembly, a battery cell, a battery, and an electrical apparatus.

### BACKGROUND

Energy conservation and emission reduction are the key to the sustainable development of the automobile industry. In this case, electric vehicles have become an important part of the sustainable development of the automobile industry because of their advantages of energy saving and environmental friendliness. For the electric vehicles, the battery technology is an important factor related to their development.

With the development of battery technology, various battery performances are constantly improving. During the use process of the battery, the reliability of the electrical performance of the battery is an important measure of the quality of the battery. Therefore, it is an urgent problem to be solved to improve the performance of a battery.

### SUMMARY OF THE INVENTION

The present application provides an electrode assembly, a battery cell, a battery, and an electrical apparatus, which can improve the reliability of the battery.

In a first aspect, an electrode assembly is provided, including: an electrode plate; and a tab, the tab being arranged at an end of the electrode plate in a first direction, the tab being provided with a bent portion, and the bent portion being used for providing stretching space for the tab.

In the embodiments of the present application, the tab in the bent portion can stretch out when the electrode assembly expands, providing the stretching space for the tab. Even when the thickness of the electrode assembly expands to twice its initial state, the electrical connection of the tab can still be maintained, and the tab is prevented from being cracked or even broken by being pulled due to excessive expansion of the thickness of the electrode assembly, thereby improving the reliability of the battery.

Compared with an electrode assembly without a bent portion, the overall length of the electrode assembly with the bent portion remains unchanged, without occupying additional space, so that the energy density of the battery cell can be ensured; meanwhile, the bent portion can provide a larger stretching space so as to be applicable to an electrode assembly with a greater degree of expansion.

In some embodiments, the bent portion includes at least one bent structure.

The bent structure enables the folding of the length of the tab to provide additional stretching space for the tab when the electrode assembly expands, so that the tab is prevented from being cracked or even broken by being pulled due to excessive expansion of the thickness of the electrode assembly.

In some embodiments, the bent structure is at least one of a sawtooth shape, an arc shape, and a square wave shape.

Bent structures of different shapes can provide stretching space for the tab, so that the tab is prevented from being cracked or even broken by being pulled due to excessive expansion of the thickness of the electrode assembly. The bent portion formed by a sawtooth-shaped bent structure allows more parts of the tab to be folded, providing more stretching space for the tab. Meanwhile, even when the bent portion has been formed, the length of the tab in the first direction can still be adjusted by adjusting the angle in the sawtooth shape, which is beneficial for controlling the overall length of the electrode assembly in the first direction, thereby preventing the electrode assembly from occupying additional space in the first direction, and ensuring the energy density of the battery cell.

In some embodiments, the bent portion includes a plurality of fold surfaces sequentially connected along the first direction, and an angle between two adjacent fold surfaces is in the range from 30° to 120°.

The appropriate angle range can not only allow the stretching space required by the tab when the electrode assembly expands, but also cause no damage to the tab and the electrode assembly, which is beneficial for prolonging the service life of the battery cell.

In some embodiments, the bent portion protrudes from the plane in which the tab is located in the second direction.

In this way, the folding of a part of the tab can be realized to provide additional stretching space for the tab when the electrode assembly expands, so that the tab is prevented from being cracked or even broken by being pulled due to excessive expansion of the thickness of the electrode assembly.

In some embodiments, a projection of the bent portion in the first direction has a size in the second direction that is in the range from 0.3 to 2 mm.

The appropriate size range can allow the stretching space required by the tab when the electrode assembly expands without taking up too much additional space, which is beneficial for improving the energy density of the battery cell.

In some embodiments, a plurality of the tabs are overlapped together to form a connecting region, and the bent portion is arranged in the connecting region.

Arranging the bent portion in the connecting region can ensure that each tab can be provided with a bent portion, which can provide stretching space for the tab when the thickness of the electrode assembly expands significantly without affecting the subsequent welding of the tab lead to the tab, thereby ensuring the reliability of the battery during use of the battery.

In some embodiments, a maximum length of the tab after extension is F, a thickness of the electrode assembly in the second direction is E, and in the first direction, a distance between the end of the connecting region facing away from the electrode plate and the electrode plate is D, and D, E and F satisfy the following relational expression:

$$F > \sqrt{D^2 + E^2}.$$

During the production process of the electrode assembly, depending on the designed maximum length F, a length to be folded can be reserved for the tab, so as to ensure the electrical connection of the tab when the electrode assembly expands, so that the tab is prevented from being cracked or even broken by being pulled due to excessive expansion of the thickness of the electrode assembly.

In some embodiments, the electrode assembly further includes: an electrode lead, an end of the electrode lead being welded to the end of the connecting region facing away from the electrode plate in the first direction.

The electrode lead can lead the current out of the inside of the electrode assembly, thereby realizing the function of the battery cell to provide electrical energy. Meanwhile, welding the electrode lead to one end of the connecting region can also ensure the connection strength of the tab at this end of the connecting region, so that the tab is prevented from falling off due to the expansion of the electrode assembly, ensuring good electrical connection of the tab, and consequently improving the reliability of the battery.

In some embodiments, the bent portion is formed by a pressing plate with a bent surface under a pressure in the range from 10 to 500 kPa.

The pressing plate with the bent surface can efficiently form a bent portion on the surface of the tab to provide stretching space for the tab when the electrode assembly expands, so that the tab is prevented from being cracked or even broken by being pulled due to excessive expansion of the thickness of the electrode assembly, thereby improving the reliability of the battery. Meanwhile, forming the bent portion under an appropriate pressure can also improve the yield of the products, thereby improving production efficiency.

In some embodiments, the tabs include a first tab and a second tab, the first tab and the second tab have opposite polarities, a plurality of the first tabs are overlapped together to form a first connecting region, a plurality of the second tabs are overlapped together to form a second connecting region, and the first connecting region and the second connecting region are respectively provided with a bent portion.

By providing bent portions on the two tabs of the electrode assembly respectively, both tabs can be protected, the electrical connection of the tabs is maintained when the electrode assembly expands, and the tabs are prevented from being cracked or even broken by being pulled due to excessive expansion of the thickness of the electrode assembly, thereby improving the reliability of the battery.

In a second aspect, a battery cell is provided, including the electrode assembly of any one of the above embodiments.

In a third aspect, a battery is provided, including the battery cell of any one of the above embodiments.

In a fourth aspect, an electrical apparatus is provided, including the battery of any one of the above embodiments, and the battery is used for providing electric energy for the electrical apparatus.

**BRIEF DESCRIPTION OF DRAWINGS**

In order to more clearly illustrate the technical solutions of the embodiments of the present application, the drawings to be used in the embodiments of the present application will be described briefly below. Obviously, the drawings described below depict merely some embodiments of the present application. For those skilled in the art, other drawings can also be obtained based on these drawings without any creative effort.

Fig. 1 is a schematic structural diagram of a vehicle provided in an embodiment of the present application;
Fig. 2 is a schematic exploded structural diagram of a battery provided in an embodiment of the present application;
Fig. 3 is a schematic exploded structural diagram of a battery cell provided in an embodiment of the present application;
Fig. 4 is a schematic structural diagram of an electrode assembly provided in an embodiment of the present application;

Fig. 5 is a schematic structural diagram of a bent portion in some electrode assemblies provided in an embodiment of the present application;

Fig. 6 is a schematic structural diagram of a bent portion in some other electrode assemblies provided in an embodiment of the present application;

Fig. 7 is a schematic structural diagram of a bent portion provided in an embodiment of the present application;

Fig. 8 is a schematic structural diagram of an expanded electrode assembly provided in an embodiment of the present application;

Fig. 9 is a schematic structural diagram of an electrode assembly at different stages provided in an embodiment of the present application; and

Fig. 10 is a schematic structural diagram of another electrode assembly provided in an embodiment of the present application.

In the drawings, the figures are not drawn to the actual scale.

## DETAILED DESCRIPTION

Implementations of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors. All technical and scientific terms used in the present application have the same meanings as those commonly understood by those skilled in the art to which the present application belongs. The terms used in the application specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skills in the art, the specific meanings of the above terms in the present application may be understood according to specific circumstances.

The reference to "embodiment" in the present application means that specific features, structures or characteristics described with reference to embodiments may be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the present application, the term "and/or" is only an association relationship for describing associated objects, indicating that there may be three relationships, for example, the expression A and/or B may represent three situations: A exists alone, both A and B exist, and B exists alone. In addition, the character "/" in the present application generally means that the associated objects before and after it are in an "or" relationship.

In the present application, "a plurality of" means two or more (including two), similarly, "a plurality of groups" means two or more groups (including two groups), and "a plurality of sheets" means two or more sheets (including two sheets).

In the embodiments of the present application, the same reference numerals indicate the same components and, for the sake of brevity, the detailed description of the same components is omitted in the different embodiments. It should be understood that the thickness, length, width and other dimensions of the various components in the embodiments of the present application shown in the drawings, as well as the overall thickness, length, width and other dimensions of an

EP 4 564 582 A1

integrated apparatus, are for illustrative purposes only, and should not constitute any limitation to the present application.

In the present application, the battery cell may include a lithium-ion secondary battery, a lithium-ion primary battery, a lithium sulfur battery, a sodium/lithium-ion battery, a sodium-ion battery, a lithium metal battery or a magnesium-ion battery and so on. This is not limited in the embodiments of the present application. The battery cell may be in a cylindrical shape, a flat shape, a cuboid shape or another shape, which is not limited in the embodiments of the present application either. The battery cells are generally classified into three types depending on the way of package: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cells.

The battery cell includes an electrode assembly and an electrolyte solution, the electrode assembly being composed of a positive electrode plate, a negative electrode plate and a separator. The battery cell operates mainly relying on the movement of metal ions between the positive electrode plate and the negative electrode plate. The positive electrode plate includes a positive electrode current collector and a positive electrode active material layer. The positive electrode active material layer is coated on the surface of the positive electrode current collector. The parts of the positive electrode current collector not coated with the positive electrode active material layer protrude from the parts of the positive electrode current collector coated with the positive electrode active material layer, and the parts of the positive electrode current collector not coated with the positive electrode active material layer serve as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer. The negative electrode active material layer is coated on the surface of the negative electrode current collector. The parts of the negative electrode current collector not coated with the negative electrode active material layer protrudes from the parts of the negative electrode current collector coated with the negative electrode active material layer, and the parts of the negative electrode current collector not coated with the negative electrode active material layer serve as a negative tab. The material of the negative electrode current collector may be copper, and the negative electrode active material may be carbon, silicon, lithium metal or lithium alloy, etc. In order to ensure that no fusing occurs when a large current passes, there are a plurality of positive tabs which are stacked together, and there are a plurality of negative tabs which are stacked together. The separator may be polypropylene (PP), polyethylene (PE), etc. In addition, the electrode assembly may have a wound structure or a laminated structure, but the embodiments of the present application are not limited thereto.

In order to meet different power requirements, the battery may include a plurality of battery cells. The plurality of battery cells may be connected in series, in parallel, or in parallel-series connection. The parallel-series connection refers to a combination of series connection and parallel connection. Optionally, first, a plurality of battery cells can be connected in series, in parallel, or in parallel-series connection to form a battery module, and then, a plurality of battery modules can be connected in series, in parallel, or in parallel-series connection to form a battery. That is, a plurality of battery cells can directly form a battery, or can first form a battery module, and then, the battery modules form a battery. The battery is further arranged in the electrical device to provide electrical energy for the electrical device.

In the battery cell in the battery, chemical energy is converted into electrical energy through its internal chemical reactions, and the electrical energy is conducted out via the tabs of the electrode assembly in order to supply power to an external electrical device. During the charging and discharging process, the electrode assembly in the battery cell is prone to expansion. Especially when using materials with high energy density, such as silicon and lithium metal, as the negative electrode, the volumetric expansion of the electrode assembly will be greater. Experiments have shown that the thickness of the expanded electrode assembly can reach 200% of its initial thickness. However, when producing an electrode assembly, the plurality of tabs overlapped together will be pulled due to the expansion of the electrode assembly. When the electrode assembly expands to a great extent, the tabs are very likely to be cracked or even broken, resulting in an increase in the internal resistance of the battery cell and producing electrical heating, which may further cause a decrease in the capacity of the battery cell, thereby reducing the reliability of the battery during use.

In view of this, the present application provides an electrode assembly, in which by providing a bent portion on the tab, when the electrode assembly expands, the tab can be stretched out from the bent portion to maintain the electrical connection of the tab, so that the tab is prevented from being cracked or even broken by being pulled due to excessive expansion of the thickness of the electrode assembly, thereby improving the reliability of the battery.

The technical solutions described in the embodiments of the present application are all applicable to various electrical devices using batteries. The electrical device may be, but not limited to, a vehicle, a mobile phone, a portable device, a laptop, a ship, a spacecraft, an electric toy, an electric tool, and so on. The vehicle may be a fuel vehicle, a gas vehicle or a new energy vehicle. The new energy vehicle may be an all-electric vehicle, a hybrid electric vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

For ease of description, in the following embodiments, the electrical device is, for example, a vehicle.

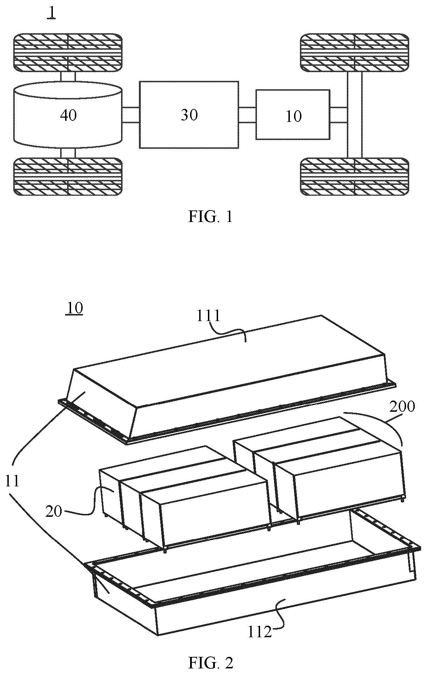

For example, Fig. 1 is a schematic structural diagram of a vehicle 1 according to an embodiment of the present application. The vehicle 1 may be a fuel vehicle, a gas vehicle or a new energy vehicle. The new energy vehicle may be an all-electric vehicle, a hybrid vehicle or an extended range electric vehicle, or the like. A motor 40, a controller 30 and a battery 10 may be provided inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can be used not only as an operation power supply of the vehicle 1, but also as a driving power supply of the vehicle 1, replacing or partially replacing fuel or natural gas to provide driving power for the vehicle 1.

In order to meet different power requirements, the battery may include a plurality of battery cells, wherein the plurality of battery cells may be in series connection, parallel connection or parallel-series connection. The parallel-series connection refers to a combination of series connection and parallel connection. The battery may also be referred to as a battery pack. Optionally, first, a plurality of battery cells can be connected in series, in parallel, or in parallel-series connection to form a battery module, and then, a plurality of battery modules can be connected in series, in parallel, or in parallel-series connection to form a battery. That is, a plurality of battery cells can directly form a battery, or can first form a battery module, and then, the battery modules form a battery.

For example, Fig. 2 shows a schematic structural diagram of a battery 10 according to an embodiment of the present application. The battery 10 may include at least one battery module 200. The battery module 200 includes a plurality of battery cells 20. The battery 10 may further include a box 11, the interior of the box 11 is a hollow structure, and a plurality of battery cells 20 are accommodated in the box 11. Fig. 2 shows a possible implementation of the box 11 according to an embodiment of the present application. As shown in Fig. 2, the box 11 may include two portions, which are referred to as a first portion 111 and a second portion 112 respectively, and the first portion 111 and the second portion 112 are snap-fitted together. The shapes of the first portion 111 and the second portion 112 may be determined according to a combined shape of the battery modules 200, and at least one of the first portion 111 and the second portion 112 has an opening. For example, as shown in Fig. 2, the first portion 111 and the second portion 112 may each be hollow cuboid with only one face as an opening face, the opening of the first portion 111 and the opening of the second portion 112 are disposed opposite to each other, and the first portion 111 and the second portion 112 are snap-fitted to each other to form the box 11 having a closed chamber.

For another example, unlike that shown in Fig. 2, only one of the first portion 111 and the second portion 112 may be a hollow cuboid having an opening, and the other may be of a plate shape to cover the opening. For example, here taking the second portion 112 as a hollow cuboid with only one face as an opening face and the first portion 111 of a plate shape as an example, the first portion 111 covers the opening of the second portion 112 to form the box 11 with the closed chamber which can be used for accommodating a plurality of battery cells 20. After the plurality of battery cells 20 are connected in a parallel connection or series connection or parallel-series connection manner, they are placed in the box 11 formed after the first portion 111 and the second portion 112 are snap-fitted together.

Optionally, the battery 10 may further include other structures, which will not be repeated here anymore. For example, the battery 10 may also comprise a bus component. The bus component is configured to implement the electric connection between the plurality of battery cells 20, such as parallel connection, series connection or parallel-series connection. Specifically, the bus component may implement the electrical connection between the battery cells 20 by connecting electrode terminals of the battery cells 20. Further, the bus component may be fixed to the electrode terminals of the battery cells 20 by welding. Electric energy of the plurality of battery cells 20 may be further led out through the box 11 by an electrically conductive structure.

Depending on different power requirements, the number of battery cells 20 in a battery module 200 may be set to any numerical value. The plurality of battery cells 20 may be connected in a parallel connection or series connection or parallel-series connection manner to achieve a larger capacity or power. Since the number of battery cells 20 included in each battery 10 may be large, in order to facilitate installation, the battery cells 20 are disposed in groups, and each group of battery cells 20 forms a battery module 200. The number of battery cells 20 included in the battery module 200 is not limited, and can be set as required.

The battery 10 may include a plurality of battery modules 200, which may be connected in series, parallel or in parallel-series connection.

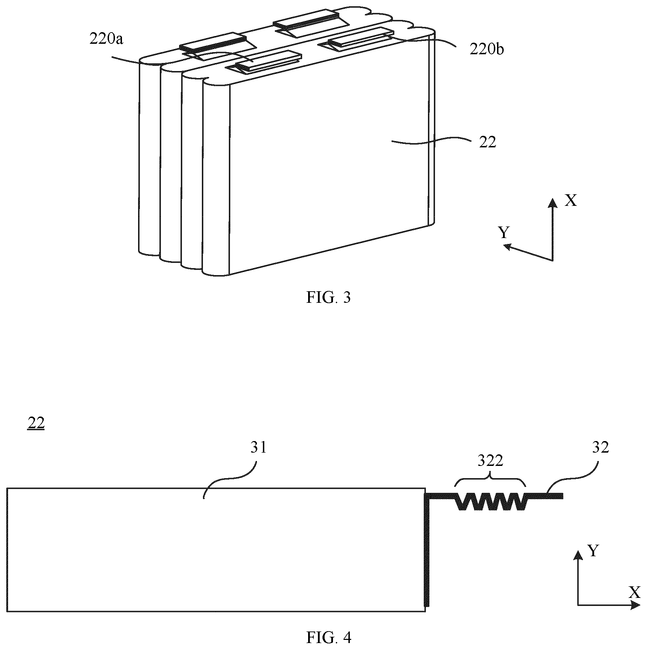

The battery cells 20 provided in the embodiments of the present application may each include one or more electrode assemblies 22, which are components in the battery cell 20 that undergo electrochemical reactions. The electrode assembly 22 may be a cylinder, a cuboid, or the like. If the electrode assembly 22 is of a cylindrical structure, the case for accommodating the electrode assembly 22 may also be of a cylindrical structure, and if the electrode assembly 22 is a cuboid structure, the case for accommodating the electrode assembly 22 may also be of a cuboid structure. As shown in Fig. 3, each electrode assembly 22 may have a first tab 220a and a second tab 220b. The first tab 220a and the second tab 220b have opposite polarities. For example, when the first tab 220a is a positive tab, the second tab 220b is a negative tab. The positive tab may be formed by stacked parts of the positive electrode plate that are not coated with the positive electrode active material layer, and the negative tab may be formed by stacked parts of the negative electrode plate that are not coated with the negative electrode active material layer.

The electrical energy generated on the electrode assembly 22 can be led out through the electrode lead. In one type of battery cell, such as a hard-shell battery cell, an electrode lead is used to connect a tab and an electrode terminal, and the electrode terminal provides electrical energy for an electrical device. The first tab 220a of one or more electrode assemblies 22 is connected to one electrode terminal via one electrode lead, and the second tab 220b of the one or more electrode assemblies 22 is connected to the other electrode terminal via the other electrode lead. For example, the positive electrode terminal 213a is connected to the positive tab via one electrode lead, and the negative electrode terminal 213b is connected to the negative tab via the other electrode lead. In another type of battery cell, such as a pouch battery cell, one end of the tab lead is welded to the tab, and the other end is used to conduct electrical energy out of the battery cell. The first tab 220a of one or more electrode assemblies 22 is connected to one electrode lead, and the second tab 220b of the one or more electrode assemblies 22 is connected to the other electrode lead.

In the battery cell 20, one electrode assembly 22 or a plurality of electrode assemblies 22 may be provided according to the actual use requirements. For example, as shown in Fig. 3, four independent electrode assemblies 22 are provided in the battery cell 20. The battery cell 20 shown in Fig. 3 is only an example. In actual production, the appearance of the battery cell 20 can be changed according to different requirements.

The embodiments of the present application provide an electrode assembly 22, as shown in Fig. 4, which includes an electrode plate 31 and a tab 32. The tab 32 is arranged at an end of the electrode plate 31 in the first direction X. The tab 32 is provided with a bent portion 322. The bent portion 322 is used to provide stretching space for the tab 32.

The electrode plate 31 is a part of the current collector coated with an active material, and may include a positive electrode plate and a negative electrode plate. The part of the positive electrode current collector coated with the positive electrode active material is the positive electrode plate, and the part of the negative electrode current collector coated with the negative electrode active material is the negative electrode plate. The positive electrode plate and the negative electrode plate may be separated by a separator so that ions in the electrolyte can pass through the separator to provide electrical energy between the positive electrode and the negative electrode, while preventing the positive electrode and the negative electrode of the battery cell from contacting and causing a short circuit. The electrode plate 31 in Fig. 4 shows a region formed by a plurality of electrode plates 31, and the region may include a positive electrode plate, a negative electrode plate, and a separator. The active material on the electrode plate 31 may be coated before the electrode assembly 22 is formed, or may be formed after the electrode assembly 22 is formed, for example, by a chemical reaction.

The tab 32 is a part of the current collector that is not coated with active material, and may also be referred to as an empty foil area in the electrode assembly 22. There are usually a plurality of tabs 32 of the same polarity which are stacked together to ensure that a large current can pass without fusing. The tabs 32 may be arranged at an end of the electrode plate 31 in the first direction X, for example, at the end shown in Fig. 4, and may be stacked in the second direction Y. The first direction X may be a height direction of the electrode assembly 22 or a width direction of the electrode assembly 22. The second direction Y is perpendicular to the first direction X, and may also be referred to as a thickness direction of the electrode assembly 22. Among them, the height direction, width direction and thickness direction of the electrode assembly are perpendicular to each other. In a possible implementation, the tabs 32 may be arranged at two ends of the electrode plate 31 in the first direction X. In this case, the tabs 32 at the two ends may have opposite polarities. In another possible implementation, two tabs 32 with opposite polarities may be arranged on two adjacent surfaces of the electrode assembly 22. That is, the tabs 32 may be arranged on the same side of the electrode assembly 22, on the adjacent sides of the electrode assembly 22, or on the opposite sides of the electrode assembly 22. The position of the tabs 32 is not limited in the present application. The tabs 32 may refer to tabs on one electrode assembly 22, or may refer to tabs of a plurality of electrode assemblies 22 that need to be overlapped together. That is, the number of the tabs 32 is not limited either in the present application.

The bent portion 322 is a part of the tab 32 having a bent shape, and is formed by bending the tab 32. The bent portion 322 may have different shapes to provide stretching space for the tab 32. As can be seen from Fig. 4, the bent portion 322 may be formed by folding at least a part of the tab 32 in the first direction X. When the electrode assembly 22 expands in the second direction Y, the tab 32 in the bent portion 322 can stretch out to avoid being pulled.

In the embodiments of the present application, the tab 32 in the bent portion 322 can stretch out when the electrode assembly 22 expands, providing the stretching space for the tab 32. Even when the thickness of the electrode assembly 22 expands to twice its initial state, the electrical connection of the tab 32 can still be maintained, and the tab 32 is prevented from being cracked or even broken by being pulled due to excessive expansion of the thickness of the electrode assembly 22, thereby improving the reliability of the battery.

Compared with an electrode assembly 22 without a bent portion 322, the overall length of the electrode assembly 22 with the bent portion 322 remains unchanged, without occupying additional space, so that the energy density of the battery cell can be ensured. Meanwhile, the bent portion 322 can provide larger stretching space so as to be applicable to an electrode assembly 22 with a greater degree of expansion.

According to some embodiments of the present application, optionally, the bent portion 322 includes at least one bent structure.

At least a part of the bent structure is not parallel to the tab 32 in the first direction X. For example, a part of the bent structure is arranged along the second direction Y, or a part of the bent structure has a certain angle with respect to the first direction X, or the bent structure is arc-shaped. In a plane formed by the first direction X and the second direction Y, the shape of the section of the bent portion 322 may be always the same.

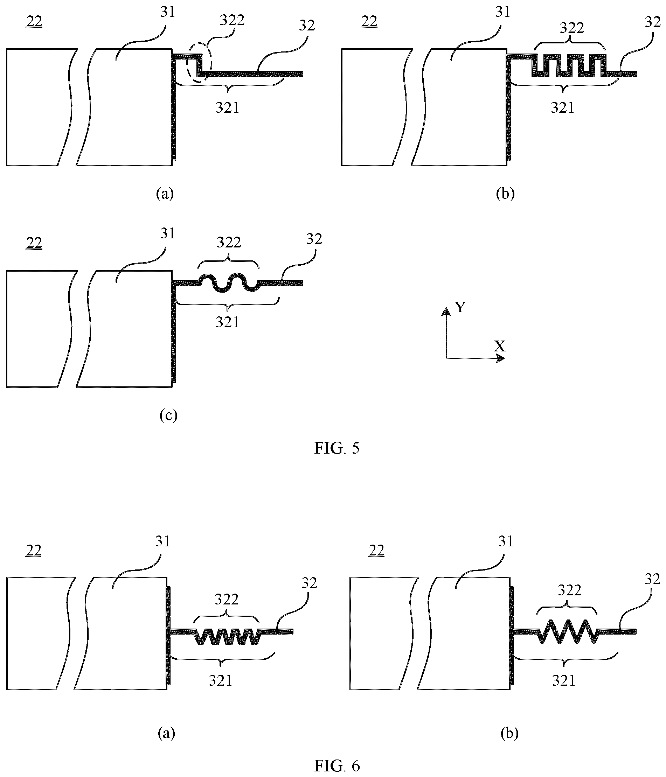

Figs. 5 and 6 show several different bent portions 322. The (a) in Fig. 5 shows a schematic diagram of a bent portion 322 including a bent structure. When the electrode assembly 22 expands, a part of the bent structure arranged along the second direction Y can provide additional stretching space for the tab 32. The (b) and (c) in Figs. 5 show schematic diagrams of a bent portion 322 including a plurality of bent structures, where in the (b) in Fig. 5, the bent portion 322 is formed by bent segments interconnected in the first direction X and the second direction Y, and in the (c) in Fig. 5, the bent portion 322 is formed by a plurality of arc-shaped structures. The bent portion 322 in Fig. 6 is formed by bent segments interconnected along the first direction X, and there is a certain angle between adjacent bent segments. It should be understood that the shape of the bent structure is not limited in the present application.

In the electrode assembly 22 shown in Fig. 5, a plurality of tabs 32 overlap at one end of the electrode assembly 22 along the second direction Y, and the bent portion 322 can be accommodated in the space between one end and the other end of the electrode assembly 22 along the second direction Y in the second direction Y, as shown in the (a) and (b) in Figs. 5. In this way, the bent portion 322 can be prevented from exceeding the edge of the electrode assembly 22 in the second direction Y and occupying additional space. In a possible implementation, considering that the electrode plate 31 has a certain thickness, there is a certain space between the plurality of tabs 32 overlapped together and the edge of the electrode plate 31 in the second direction Y. Therefore, the bent portion 322 can protrude from the plane in which the tabs 32 are located without exceeding the edge formed by the electrode plate 31, as shown in the (c) in Fig. 5, which can also prevent the bent portion 322 from occupying additional space in the second direction Y. Optionally, in the electrode assembly 22 shown in Fig. 6, a plurality of tabs 32 may overlap at a middle position of the electrode assembly 22 along the second direction Y, thereby providing more accommodating space for the bent portion 322 in the second direction Y. For example, the (a) in Fig. 6 shows that the bent portion 322 is accommodated in the space between the middle and one end of the electrode assembly 22 along the second direction Y, and the (b) in Fig. 6 shows that the bent portion 322 is accommodated in the space between the middle and both ends of the electrode assembly 22 along the second direction Y.

The bent structure enables the folding of the length of the tab 32 to provide additional stretching space for the tab 32 when the electrode assembly 22 expands, so that the tab 32 is prevented from being cracked or even broken by being pulled due to excessive expansion of the thickness of the electrode assembly 22.

According to some embodiments of the present application, optionally, the bent structure is at least one of a sawtooth shape, an arc shape, and a square wave shape.

Figs. 5 and 6 show several possible bent structures. The (b) in Fig. 5 shows a case where the bent structure is a square wave shape, the (c) in Fig. 5 shows a case where the bent structure is an arc shape, and Fig. 6 shows a case where the bent structure is a sawtooth shape. A bent structure may be regarded as a period of a bent portion, and a bent portion may be formed by repeating a bent structure multiple times.

Fig. 6 shows a schematic diagram of a bent portion 322 formed by some sawtooth-shaped bent structures. The sawtooth-shaped bent structure may include at least two interconnected surfaces with a certain angle therebetween. At least one sawtooth-shaped bent structure may form a sawtooth-shaped bent portion 322.

Bent structures of different shapes can provide stretching space for the tab 32, so that the tab 32 is prevented from being cracked or even broken by being pulled due to excessive expansion of the thickness of the electrode assembly 22. The bent portion 322 formed by the sawtooth-shaped bent structure allows more parts of the tab 32 to be folded, providing more stretching space for the tab 32. Meanwhile, even when the bent portion 322 has been formed, the length of the tab 32 in the first direction can still be adjusted by adjusting the angle between two adjacent connected surfaces in the sawtooth shape, which is beneficial for controlling the overall length of the electrode assembly 22 in the first direction X, thereby preventing the electrode assembly 22 from occupying additional space in the first direction X, and ensuring the energy density of the battery cell.

According to some embodiments of the present application, optionally, the bent portion 322 includes a plurality of fold surfaces 323 sequentially connected along the first direction X, and the angle between two adjacent fold surfaces 323 is in the range from 30° to 120°.

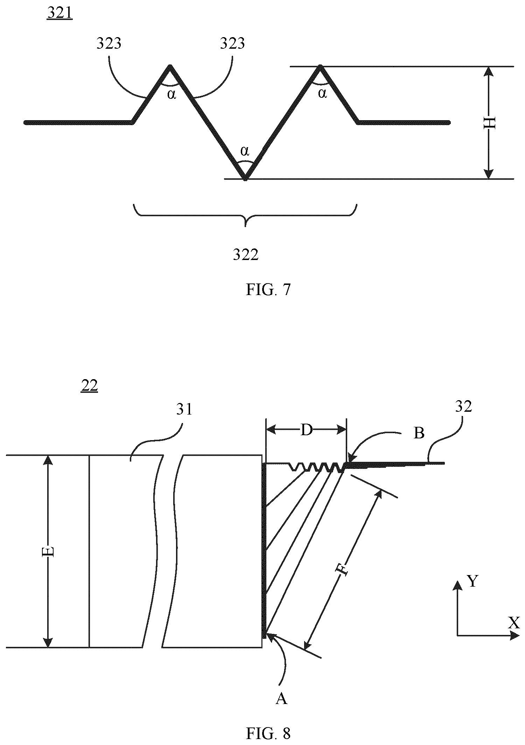

Taking the bent portion 322 shown in the (b) in Fig. 6 as an example, Fig. 7 is an enlarged view of this bent portion 322. The fold surface 323 refers to a surface on the tab 32 that is not parallel to the first direction X. The fold surface 323 can fold up the tab 32 in the first direction X to provide stretching space for the tab 32 when the electrode assembly 22 expands. The angle between two adjacent fold surfaces 323 may be an angle $\alpha$ as shown in the figure. The angle $\alpha$ in the bent portion 322 provided in the embodiments of the present application may be in the range from 30° to 120°. In a possible implementation, the angles between any two adjacent fold surfaces 323 are equal; and in another possible implementation, the angles $\alpha$ at different positions may have different values.

If the angle $\alpha$ is too small, the angle formed by two adjacent fold surfaces 323 will be acute, so that the component wrapping the electrode assembly 22, such as the insulating component, may easily become punctured, when the electrode assembly 22 is subjected to external impact. The corners of the two fold surfaces 323 may also be easily damaged and be more likely to be cracked or broken. Meanwhile, if the angle $\alpha$ is too small, the arrangement of the fold surfaces 323 will be too compact, and it will be difficult to stretch the tab 32 at the bent portion 322 when the electrode assembly 22 expands, which is not beneficial for achieving the stretching of the tab 32.

If the angle $\alpha$ is too large, the arrangement of the fold surfaces 323 will be too loose, and fewer parts can be folded. When the electrode assembly 22 expands, the stretching space provided for the tab 32 is limited, making it impossible to be compatible with the significant expansion of the electrode assembly 22.

The appropriate angle range can not only allow the stretching space required by the tab 32 when the electrode assembly 22 expands, but also cause no damage to the tab 32 and the electrode assembly 22, which is beneficial for prolonging the service life of the battery cell.

According to some embodiments of the present application, optionally, the bent portion 322 protrudes in the second direction Y from the plane in which the tab 32 is located.

The plane in which the tab 32 is located refers to the plane in which a plurality of tabs 32 are overlapped together and the bent portion 322 has not yet been formed. In other words, the plane in which the tab 32 is located may also refer to the plane in which the part of the connecting region 321 of the tab 32 other than the bent portion 322 is located. As shown in Figs. 4 to 7, in the second direction Y, the bent portion 322 may protrude from one side of the plane in which the tab 32 is located, or may protrude from both sides of the plane in which the tab 32 is located.

In this way, the folding of a part of the tab 32 can be realized to provide additional stretching space for the tab 32 when the electrode assembly 22 expands, so that the tab 32 is prevented from being cracked or even broken by being pulled due to excessive expansion of the thickness of the electrode assembly 22.

According to some embodiments of the present application, optionally, a projection of the bent portion 322 in the first direction X has a size in the second direction Y that is in the range from 0.3 to 2 mm.

As shown in Fig. 7, the projection of the bent portion 322 in the first direction X is a plane perpendicular to the first direction X, and the size of the plane in the second direction Y is the size H shown in Fig. 7, and the size H has a value ranging from 0.3 to 2 mm. The size H may also be regarded as the distance between two points of the bent portion 322 that are farthest from each other in the second direction Y in the plane formed by the first direction X and the second direction Y.

If the size H is too small, the part of the tab 32 that is folded up will be small, and when the electrode assembly 22 expands significantly, it is impossible to provide sufficient stretching space for the tab 32. If the size H is too great, the tab 32 may be easily folded inwardly into the electrode plate 31, increasing the possibility of short circuit of the battery cell. Meanwhile, if the size H is too great, the bent portion 322 will occupy too much space in the second direction Y, which is not beneficial for improving the energy density of the battery cell.

The appropriate size range can allow the stretching space required by the tab 32 when the electrode assembly 22 expands without taking up too much additional space, which is beneficial for improving the energy density of the battery cell.

According to some embodiments of the present application, optionally, a plurality of tabs 32 are overlapped together to form a connecting region 321, and the bent portion 322 is arranged in the connecting region 321.

The connecting region 321 refers to the part where the plurality of tabs 32 are overlapped together. Considering that the active material on the electrode plate 31 has a certain thickness, when the plurality of tabs 32 are overlapped together, a part of the tabs 32 close to one end of the electrode plate 31 along the first direction X needs to be folded to a certain extent. Compared with the tab 32 with more folded parts, the tab 32 not folded or with fewer folded parts will appear longer in the first direction X, and this longer part of the tab 32 is not included in the range of the connecting region 321. In addition, at the end close to the electrode plate 31 along the first direction X, the part of the tab 32 that is folded due to the thickness of the electrode plate 31 is not included in the range of the connecting region 321 either. That is, the connecting region 321 only includes the area formed by the plurality of tabs 32.

The bent portion 322 is formed by bending the tab 32 at the connecting region 321. It can be understood that the tab 32 at the connecting region 321 includes a plurality of tabs 32 overlapped together. In the process of bending of the tab 32 at the connecting region 321, the plurality of tabs 32 can be overlapped together as a whole and the plurality of tabs 32 can be subjected to the same bending process at the same time.

By providing the bent portion 322 in the connecting region 321, it can be ensured that each tab can be provided with a bent portion 322, which can provide stretching space for the tab 32 when the thickness of the electrode assembly 22 expands significantly without affecting the subsequent welding of the tab lead to the tab 32, thereby ensuring the reliability of the battery during use of the battery.

According to some embodiments of the present application, optionally, the length of the tab 32 after extension is F, the thickness of the electrode assembly 22 in the second direction Y is E, and in the first direction X, the distance between the end of the connecting region 321 facing away from the electrode plate 31 and the electrode plate 31 is D, and D, E and F

$$F > \sqrt{D^2 + E^2}$$

satisfy the following relational expression: .

Fig. 8 shows a possible state of an expanded electrode assembly 22. As shown in Fig. 8, after the electrode assembly 22 expands, the tab 32 in the bent portion 322 is stretched out from the folded state. The stretched tab 32 extends in the plane formed by the first direction X and the second direction Y. When the tab 32 is stretched to the maximum length, it may appear as an oblique line in the plane formed by the first direction X and the second direction Y. The length of the tab 32 after extension refers to the maximum length to which the tab 32 can be stretched, such as the length F shown in Fig. 8. In order to ensure the electrical connection of the tab 32, the length F of the tab 32 after extension should satisfy the relational expression (1).

$$F > \sqrt{D^2 + E^2} \qquad\qquad (1)$$

E is the thickness of the expanded electrode assembly 22 in the second direction Y. The thickness may be a pre-estimated value obtained by simulating the use process of the electrode assembly 22, or a value obtained by measuring the electrode assembly 22 in the same type of battery cells after the cells have been used to a certain extent. D is the distance between the end of the connecting region 321 facing away from the electrode plate 31 and the electrode plate 31, where the end of the connecting region 321 facing away from the electrode plate 31 will be connected to the lead of the tab 32, for example, by welding. Therefore, the maximum length F that the tab 32 can be stretched to in the plane in which the first direction X and the second direction Y are located is calculated from the end A where the tab 32 is connected to the electrode plate 31 to the end B of the connecting region 321 facing away from the electrode plate 31. In a possible calculation method, the end B of the connecting region 321 facing away from the electrode plate 31 may also be the end close to the electrode plate 31 in the first direction X in the area where the lead of the tab 32 is connected to the tab 32.

In a specific implementation, taking a stacked electrode assembly 22 as an example, the stacked thickness of an electrode assembly 22 is designed to be 7 mm, and the thickness of the electrode assembly 22 at the end of the cycle will reach 12 mm. The distance between the two ends of the connecting region 321 in the first direction X is 5 mm, and the length of the outermost tab 32 in the first direction X needs to be greater than 13 mm. In addition, since the distance between the two ends of the connecting region 321 is designed to be 5 mm, in the state where the bent portion 322 has not yet been formed in the connecting region 321, the length between the two ends of the connecting region 321 in the first direction X should be greater than 5 mm, and is 6 mm in this implementation, which can meet the requirements. That is, in the case where the bent portion 322 is provided on the connecting region 321, the length between the two ends of the connecting region 321 in the first direction X can be shortened from 6 mm to 5 mm.

During the production process of the electrode assembly 22, depending on the designed maximum length F, a length to be folded can be reserved for the tab 32, so as to ensure the electrical connection of the tab 32 when the electrode assembly 22 expands, so that the tab 32 is prevented from being cracked or even broken by being pulled due to excessive expansion of the thickness of the electrode assembly 22.

According to some embodiments of the present application, optionally, the electrode assembly 22 further includes an electrode lead, one end of the electrode lead being welded to an end of the connecting region 321 facing away from the electrode plate 31 in the first direction X.

The electrode lead refers to a structure for conducting the current generated inside the electrode assembly 22 to the outside of the electrode assembly 22. In order to avoid short circuit caused by electrical connection between the electrode assembly 22 and other parts of the battery cell, the outer side of the electrode assembly 22 is usually wrapped with an insulating layer, and one end of the electrode lead is welded to the connecting region 321, and the other end extends out of the insulating layer to conduct current out.

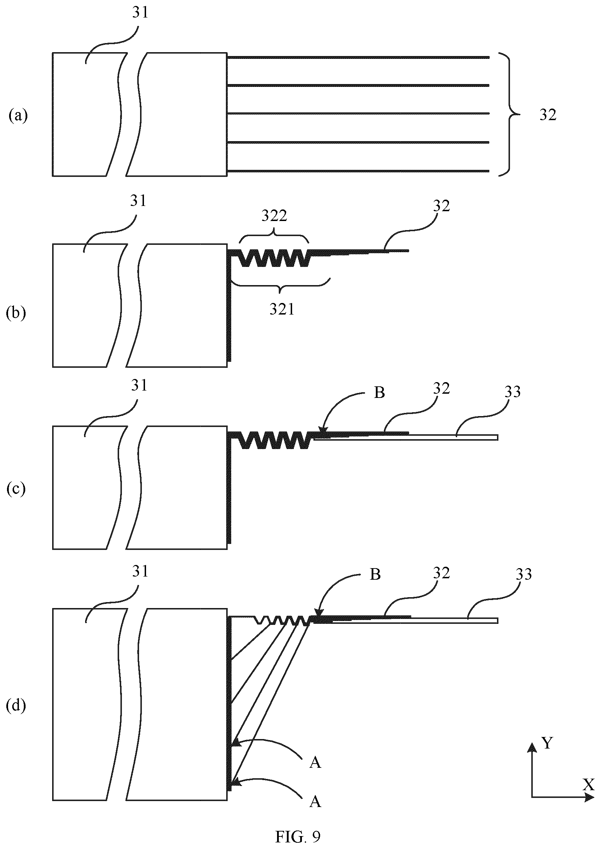

Possible states of the electrode assembly 22 provided in the embodiments of the present application at different stages are to be described below in conjunction with Fig. 9.

The (a) in Fig. 9 shows that when the electrode plates 31 are stacked or wound or otherwise formed into the electrode assembly 22, the tabs 32 are arranged at the end of the electrode plates 31 in the first direction X. During the production process of the electrode assembly 22, considering the part of the tab 32 in the bent portion 322 that needs to be folded, a greater size of the tab 32 before being shaped along the first direction X may be reserved. Here, shaping refers to the operation of overlapping a plurality of tabs 32 together.

The (b) in Fig. 9 shows the state of the electrode plate 31 after being shaped, and shows a situation where a plurality of tabs 32 are overlapped at an end of the electrode assembly 22 along the second direction Y. The plurality of tabs 32 are overlapped together to form a connecting region 321, where the connecting region 321 only includes an area formed by the plurality of tabs 32. In the embodiments of the present application, while the tabs 32 are being shaped, a bent portion 322 is provided on the connecting region 321.

The (c) in Fig. 9 shows a state where the electrode lead is welded to the end B of the connecting region 321 facing away from the electrode plate 31 in the first direction X. There is a certain overlap between the electrode lead and the welded part of the connecting region 321, which can ensure that each layer of tab 32 can conduct the electrons inside the electrode assembly 22 to the outside through the lead of the tab 32, thereby forming a stable current. In a possible implementation, the lead of the tab 32 can be welded to at least a part of the tab 32 other than the connecting region 321 in addition to being welded to the end B of the connecting region 321, so as to ensure the welding strength between the lead of the tab 32 and the tab 32.

The (d) in Fig. 9 shows a possible state of an expanded electrode assembly 22. After the electrode assembly 22 expands, the tab 32 is pulled out from the bent portion 322 to ensure electrical connection of the tab 32. Since the possible expansion degree of the electrode assembly 22 is taken into consideration and the size of the tab 32 is designed on this basis, after the electrode assembly 22 expands, a good connection can still be maintained from the end A where the tab 32 is connected to the electrode plate 31 to the end B where the lead of the tab 32 is connected to the tab 32.

The electrode lead can lead the current out of the inside of the electrode assembly 22, thereby realizing the function of the battery cell to provide electrical energy. Meanwhile, welding the electrode lead to the end B of the connecting region 321 can also ensure the connection strength of the tab 32 at the end B of the connecting region 321, so that the tab 32 is prevented from falling off due to the expansion of the electrode assembly 22, ensuring good electrical connection of the tab 32, and consequently improving the reliability of the battery.

According to some embodiments of the present application, optionally, the bent portion 322 is formed by a pressing plate with a bent surface under a pressure in the range from 10 to 500 kPa.

During the production process of the electrode assembly 22, it is usually necessary to shape the tabs 32 by the pressing plate so that the plurality of tabs 32 are overlapped together to ensure that a large current can pass through the tabs 32 without fusing. In the embodiments of the present application, the pressing plate with a bent surface may be pre-processed, and when the tabs 32 are being shaped by using the pressing plate, bent portions 322 are formed on the tabs 32 along the bent surface of the pressing plate. For example, a pressing plate with a bent surface may be provided on either side of the tabs 32 respectively along the second direction Y. The bent surfaces on the two pressing plates cooperate with each other. Then, after the two pressing plates simultaneously apply pressure to the tabs 32, bent portions 322 can be left on the tabs 32.

The pressure applied by the pressing plates to the tabs 32 may be in the range from 10 kPa to 500 kPa. Too low pressure is not beneficial to the forming of the bent portion 322, and the plurality of shaped tabs 32 may easily loosen, which will also affect the subsequent production process. Excessive pressure can easily damage the tabs 32. For example, cracks may be generated in the tabs 32 during the shaping process, which may increase the internal resistance of the tabs 32 during the conduction process.

The pressing plates with the bent surfaces can efficiently form bent portions 322 on the surfaces of the tabs 32 to provide stretching space for the tabs 32 when the electrode assembly 22 expands, so that the tabs 32 are prevented from being cracked or even broken by being pulled due to excessive expansion of the thickness of the electrode assembly 22, thereby improving the reliability of the battery. Meanwhile, forming the bent portion 322 under appropriate pressure can also improve the yield of the products, thereby improving production efficiency.

According to some embodiments of the present application, optionally, the tabs 32 include first tabs 220a and second tabs 220b, the first tabs 220a and the second tabs 220b have opposite polarities, a plurality of first tabs 220a are overlapped together to form a first connecting region 3211, a plurality of second tabs 220b are overlapped together to form a second connecting region 3212, and the first connecting region 3211 and the second connecting region 3212 are respectively provided with a bent portion 322.

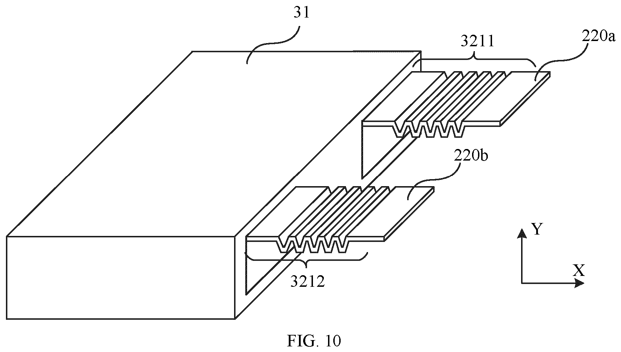

The electrode assembly 22 is usually provided with a first tab 220a and a second tab 220b with opposite polarities. For example, the first tab 220a is a positive tab 32, and the second tab 220b is a negative tab 32. In the embodiments of the present application, the first connecting region 3211 of the first tab 220a and the second connecting region 3212 of the second tab 220b may both be provided with a bent portion 322, as shown in Fig. 10. When the electrode assembly 22 expands along the second direction Y, the first tab 220a and the second tab 220b both have a certain stretching space, that is, the first tab 220a and the second tab 220b can be stretched out from the corresponding bent portions 322 respectively to prevent the tabs 32 from being pulled and cracked or even broken.

By providing bent portions 322 on the two tabs 32 of the electrode assembly 22 respectively, both tabs 32 can be protected, the electrical connection of the tabs 32 is maintained when the electrode assembly 22 expands, and the tabs 32 are prevented from being cracked or even broken by being pulled due to excessive expansion of the thickness of the electrode assembly 22, thereby improving the reliability of the battery.

The present application further provides a battery cell including the electrode assembly 22 according to any one of the above embodiments.

The present application further provides a battery including the battery cell 20 according to any one of the above embodiments.

The present application further provides an electrical apparatus including the battery 10 according to any one of the above embodiments, and the battery 10 is used for providing electric energy for the electrical apparatus.

While the present application has been described with reference to the preferred embodiments, various modifications may be made and components thereof may be replaced with equivalents without departing from the scope of the present application. In particular, the technical features mentioned in the various examples can be combined in any manner as long as there is no structural conflict. The present application is not limited to the specific embodiments disclosed herein, but rather includes all technical solutions falling within the scope of the claims.

**Claims**

1. An electrode assembly, comprising:

   an electrode plate; and
   a tab arranged at an end of the electrode plate in a first direction and provided with a bent portion, the bent portion used for providing stretching space for the tab.

2. The electrode assembly according to claim 1, wherein the bent portion comprises at least one bent structure.

3. The electrode assembly according to claim 2, wherein the bent structure is at least one of a sawtooth shape, an arc shape, and a square wave shape.

4. The electrode assembly according to any one of claims 1 to 3, wherein the bent portion comprises a plurality of fold surfaces sequentially connected along the first direction, and an angle between two adjacent fold surfaces is in the range from 30° to 120°.

5. The electrode assembly according to any one of claims 1 to 4, wherein the bent portion protrudes from a plane in which the tab is located in the second direction.

6. The electrode assembly according to claim 5, wherein a projection of the bent portion in the first direction has a size in the second direction that is in the range from 0.3 to 2 mm.

7. The electrode assembly according to any one of claims 1 to 6, wherein a plurality of the tabs are overlapped together to form a connecting region, and the bent portion is arranged in the connecting region.

8. The electrode assembly according to claim 7, wherein a length of the tab after extension is F, a thickness of the electrode assembly in the second direction is E, and in the first direction, a distance between an end of the connecting region facing away from the electrode plate and the electrode plate is D, and D, E and F satisfy the following relational expression:

$$F > \sqrt{D^2 + E^2}$$
.

9. The electrode assembly according to claim 7 or 8, further comprising:
   an electrode lead, one end of the electrode lead welded to an end of the connecting region facing away from the electrode plate in the first direction.

10. The electrode assembly according to any one of claims 1 to 9, wherein the bent portion is formed by a pressing plate with a bent surface under a pressure in the range from 10 to 500 kPa.

11. The electrode assembly according to any one of claims 1 to 10, wherein the tabs comprise a first tab and a second tab, the first tab and the second tab have opposite polarities, a plurality of the first tabs are overlapped together to form a first connecting region, a plurality of the second tabs are overlapped together to form a second connecting region, and the first connecting region and the second connecting region are each provided with a bent portion.

12. A battery cell, comprising:
    the electrode assembly according to any one of claims 1 to 11.

13. A battery, comprising:
    the battery cell according to claim 12.

14. An electrical apparatus, comprising the battery according to claim 13, the battery used for providing electrical energy for the electrical apparatus.

FIG. 1

FIG. 2

220a

220b

22

X

Y

FIG. 3

22

31

322

32

Y

X

FIG. 4

22    31    322    32

321

(a)

22    31    322    32

321

(b)

22    31    322    32

321

(c)

Y

X

FIG. 5

22    31    322    32

321

(a)

22    31    322    32

321

(b)

FIG. 6

321

323        323

α

α

α

H

322

FIG. 7

22

31                    D        B        32

E

F

A

Y

X

FIG. 8

FIG. 9

FIG. 10

## INTERNATIONAL SEARCH REPORT

| International application No. |
|---|
| **PCT/CN2022/122107** |

| A. | CLASSIFICATION OF SUBJECT MATTER |
|---|---|

H01M50/533(2021.01)i;H01M4/70(2006.01)i

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, CNABS, DWPI, WPABS, USTXT, CNKI: 极耳, 弯曲部, 弯折部, 锯齿, 方形波, 波浪, tab, bent portion, flex, sawtooth, square, wave

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109713207 A (BATTFLEX TECHNOLOGIES, INC. et al.) 03 May 2019 (2019-05-03) description, paragraphs 5-23 and 44-67, and description, figures 9 and 16 | 1-14 |
| X | CN 108123074 A (BEIJING XIAOMI MOBILE SOFTWARE CO., LTD.) 05 June 2018 (2018-06-05) description, paragraphs 34-45, and figure 5 | 1-14 |
| X | CN 114373885 A (DONGGUAN AMPEREX TECHNOLOGY LTD.) 19 April 2022 (2022-04-19) description, paragraphs 5-22, and description, figures 2 and 5-6 | 1-14 |
| X | CN 101005127 A (SHENZHEN BAK BATTERY CO., LTD.) 25 July 2007 (2007-07-25) description, page 3, line 6 to last line, and description, figures 5-6 | 1-14 |
| X | CN 102983304 A (TIANJIN LISHEN BATTERY JOINT-STOCK CO., LTD.) 20 March 2013 (2013-03-20) description, paragraphs 7-19, and figures 1-2 | 1-14 |
| X | CN 107732286 A (DONGGUAN CHAM BATTERY TECHNOLOGY CO., LTD.) 23 February 2018 (2018-02-23) description, paragraphs 6-27, and figure 1 | 1-14 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **02 May 2023** | **08 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/122107**

| Patent document cited in search report | | | Publication date (day/month/year) | Patent family member(s) | | | Publication date (day/month/year) |
|---|---|---|---|---|---|---|---|
| CN | 109713207 | A | 03 May 2019 | CN | 209401729 | U | 17 September 2019 |
| CN | 108123074 | A | 05 June 2018 | None | | | |
| CN | 114373885 | A | 19 April 2022 | None | | | |
| CN | 101005127 | A | 25 July 2007 | CN | 100590909 | C | 17 February 2010 |
| CN | 102983304 | A | 20 March 2013 | None | | | |
| CN | 107732286 | A | 23 February 2018 | CN | 107732286 | B | 07 July 2020 |

Form PCT/ISA/210 (patent family annex) (July 2022)